# EUROPÄISCHE PATENTSCHRIFT

(11) **EP 3 212 395 B1**
(45) Veröffentlichungstag und Bekanntmachung des Hinweises auf die Patenterteilung: **26.09.2018**
(21) Anmeldenummer: 15780846.0
(22) Anmeldetag: 14.10.2015
(51) Int. Cl.: B32B 17/10, E04F 15/02, E04F 15/08, E04B 5/46

(54) **BEGEHBARE VERBUNDSICHERHEITSGLASSCHEIBE MIT RUTSCHHEMMENDER OBERFLÄCHE**
ACCESSIBLE LAMINATED SAFETY GLASS PANE WITH ANTI-SLIP SURFACE
VITRE DE SÉCURITÉ COMPOSITE ACCESSIBLE DOTÉE DE SURFACE ANTIDÉRAPANTE

(30) Priorität: 28.10.2014 EP 14190620
(43) Veröffentlichungstag der Anmeldung: 06.09.2017
(73) Patentinhaber: Saint-Gobain Glass France, 92400 Courbevoie (FR)
(72) Erfinder: ECKELT, Christian, A-4400 Steyr (AT)
(74) Vertreter: Lendvai, Tomas
(86) Internationale Anmeldenummer: PCT/EP2015/073741
(87) Internationale Veröffentlichungsnummer: WO 2016/066423

(56) Entgegenhaltungen:
- WO-A1-2013/188489
- DE-A1- 4 210 924
- DE-A1- 10 003 404
- GB-A- 1 292 905

## Beschreibung

Die Erfindung betrifft eine neue begehbare Verbundsicherheitsglasscheibe mit rutschhemmender Oberfläche und ein Verfahren zur Herstellung derselben.

Glasflächen bieten im Bau- und Architekturbereich Schutz vor Umwelteinflüssen und halten die Wärme im Raum. Glasflächen dienen im Wesentlichen zur Beleuchtung von Räumen mit natürlichem Licht und ermöglichen den Blickkontakt zur Umwelt. Verglasungen können in verschiedenen Anwendungen betretbar bei Instandsetzungsarbeiten, begehbar als Fußböden oder befahrbar für Fahrzeuge sein. Damit die Glasoberfläche für diese Anwendungen rutschsicher ist wird sie mit rutschhemmender Oberfläche ausgestaltet.

Aus EP 0513707 B2 ist eine begehbare Glasplatte mit einer aufgebrachten rutschhemmenden Oberflächenbeschichtung bekannt. Die Oberflächenbeschichtung ist eine auf die Glasoberfläche aufgebrachte und eingebrannte scharfkantige Partikel enthaltende Glasfritte. Der Anteil der scharfkantigen Partikel beträgt 5 % bis 30% der Beschichtung bei einer mittleren Korngröße der Partikel von 50 µm und einer maximalen Korngröße von 250 µm. Die Partikel bestehen vorzugsweise aus Silikaten oder Metalloxiden einschließlich Mischungen daraus, und/oder Siliziumoxid oder Sandkörnern.

Aus DE 100 03 404 A1 ist eine Bodenplatte mit einem Oberflächenbelag aus Glas oder Keramik mit einer Trägerschicht bekannt, in welche kugelförmige Partikel aus Glas oder Keramik eingebettet sind. Die Partikel ragen wenigstens teilweise aus der Trägerschicht heraus, wobei die Dicke der Trägerschicht größer oder gleich einer Hälfte eines mittleren Durchmessers der kugelförmigen Partikel ist. Aufgrund der im Wesentlichen glatten abgerundeten Oberfläche der Partikel soll die Verletzungsgefahr verringert und die Reinigungsmöglichkeit der Bodenplatte verbessert werden. Außerdem sollen die Partikel besonders abriebfest sein, da sie keine Kanten und Oberflächenrauhigkeiten aufweisen, die sich bei Belastung leicht abnutzen können.

Aus DE 196 29 241 C1 ist eine weitere Platte mit einem rutschhemmenden Oberflächenbelag bekannt. Dort wird eine Glasabdeckscheibe für einen Bodeneinbauscheinwerfer mit einer rutschfesten Oberfläche beschrieben, bei der als abrasives Material harte Partikel aus Korund, Zirkoniumoxid, Siliziumkarbid, Bornitrid, Diamant oder Titanpulver in eine Trägerschicht eingebettet sind und über deren mittlere Höhe herausragen. Eine solche rutschfeste Oberfläche weist den Nachteil auf, dass sie ihre rutschhemmenden Eigenschaften im täglichen Gebrauch schnell verliert, da die kantigen Partikel relativ schnell abnutzen.

Aus DE 100 16 485 A1 ist ein Glassubstrat mit hydrophober Oberflächenstruktur bekannt, das eine Schicht aus einem Glasfluss und strukturbildenden Partikeln aus bevorzugt Oxiden und Silikaten aufweist. Das Glassubstrat ist als konstruktives selbstreinigendes Element im Bausektor verwendbar zum Beispiel als Dachziegel, Klinker und Fliesen. Aus DE 42 28 445 A1 ist eine Glasscheibe bekannt, die als Bodenbelag oder als selbsttragender begehbarer Boden Verwendung findet und die eine Beschichtung aus einer Glasur mit eingelagerten körnigen Glasteilchen insbesondere aus Bleiborsilikatglas trägt. Aus DE 102006040007 B3 ist ein begehbares Glaselement mit einer Glasscheibe und mit einer auf der Glasscheibe aufgebrachten Oberflächenbeschichtung bekannt, welche aus einer scharfkantige Partikel enthaltenden eingebrannten Glasfritte besteht, wobei der Gewichtsanteil der scharfkantigen Partikel 5% bis 30% beträgt und die Partikel eine Größe zwischen 50 µm und 250 µm bei einer mittleren Korngröße von 100 µm aufweisen, wobei die scharfkantigen Partikel aus Glaskeramik bestehen. Weitere begehbare Glaselemente sind aus DE4210924 A1 und DE10003404 A1 bekannt.

Begehbare Verbundsicherheitsglasscheiben mit rutschhemmender Oberfläche sind mindestens aus zwei Scheiben aufgebaut, wobei die oberste Glasscheibe als Schutzscheibe dient und die Gläser, die sich drunter befinden, die Tragfunktion erfüllen. Um höhere Belastungen aufnehmen zu können, und um entsprechende Sicherheiten zu erreichen, bestehen derartige Scheiben insgesamt aus drei oder mehreren Scheiben, die über Polymerschichten fest miteinander verbunden sind.

Die rutschhemmende Oberfläche hat den Nachteil, dass sie nach einer bestimmten Nutzungsdauer abgenutzt wird und die Rutschhemmung erheblich nachlässt. Daher muss eine abgenutzte rutschhemmende Oberfläche durch eine Verbundsicherheitsglasscheibe mit rutschhemmender Oberfläche ausgetauscht werden. Der Austausch der Verbundsicherheitsglasscheibe mit abgenutzter, rutschhemmender Oberfläche ist sehr aufwendig und teuer, da die gesamte Verbundsicherheitsglasscheibe ausgetauscht werden muss. Die unter der rutschhemmenden Glasscheibe existierenden Verglasungen sind nach Abnutzung der rutschhemmenden Oberflächen noch voll funktionsfähig. Sie können aber nur mit sehr großem Aufwand von der abgenutzten Glasscheibe getrennt werden. Dieser Aufwand steht in keinem Verhältnis zu einer neuen Verglasung, die aber bereits als Neuprodukt sehr hohen Herstellkosten unterliegt.

Der Erfindung liegt die Aufgabe zu Grunde, eine neue begehbare Verbundsicherheitsglasscheibe mit rutschhemmender Oberfläche bereitzustellen, bei der nach Abnutzung der rutschhemmenden Oberflächenschicht nicht die gesamte Verglasung ersetzt werden muss. Der Erfindung liegt die weitere Aufgabe zu Grunde, ein wirtschaftliches und umweltschonendes Verfahren bereitzustellen, bei dem die abgenutzte rutschhemmende Oberfläche ausgetauscht wird ohne dabei die gesamte Verbundsicherheitsglasscheibe auszutauschen. Der Erfindung liegt die weitere Aufgabe zu Grunde, eine wirtschaftliche Verwendung für die begehbare Verbundsicherheitsglasscheibe mit rutschhemmender Oberfläche bereitzustellen.

Die Aufgabe der Erfindung wird erfindungsgemäß durch eine begehbare Verbundsicherheitsglasscheibe mit rutschhemmender Oberfläche mit den Merkmalen des Patentanspruch 1 gelöst. Weiter wird die Erfindung durch die Merkmale der Patentansprüche 13 und 15 gelöst. Vorteilhafte Ausgestaltungen gehen aus den Unteransprüchen hervor. Die Aufgabe der Erfindung wird daher erfindungsgemäß durch eine begehbare Verbundsicherheitsglasscheibe mit rutschhemmender Oberfläche gelöst, umfassend mindestens zwei Glasscheiben, die mit einer Polymerschicht fest miteinander zu einer Verbundsicherheitsglasscheibe verbunden sind, wobei
- auf der einen Oberfläche der Verbundsicherheitsglasscheibe eine polymere Zwischenschicht aufgebracht ist,
- auf der polymeren Zwischenschicht eine Glasscheibe mit einer rutschhemmenden Oberfläche aufgebracht ist,
- im Randbereich der polymeren Zwischenschicht umlaufend eine elastische Polymerdichtung eingesetzt ist,
- die Verbundsicherheitsglasscheibe eine Lochbohrung aufweist und
   die Lochbohrung bei Unterdruck mit einem Ventil versiegelt ist, wobei das Ventil den Unterdruck aufrechterhält.

Eine begehbare Verbundsicherheitsglasscheibe mit rutschhemmender Oberfläche ist mindestens aus drei Scheiben aufgebaut, wobei die oberste Glasscheibe als Schutzscheibe dient und die Glasscheiben, die sich drunter befinden, die Tragfunktion erfüllen. Die oberste Glasscheibe weist aufgrund der Unfallverhütungsvorschriften eine rutschhemmende Oberfläche auf. Durch die aufgeraute Oberfläche wird die Rutsch- und Unfallgefahr deutlich verringert. Die Glasscheibe mit rutschhemmender Oberfläche wird im Folgenden auch rutschhemmende Glasscheibe genannt.

Die oberste Glasscheibe besteht gewöhnlich aus Einscheibensicherheitsglas. Die oberste Glasscheibe schützt die statisch tragenden Scheiben vor stoßartigen Belastungen und Beschädigungen und ist mit einer rauen Oberfläche ausgestattet. Das tragende Glaspaket aus weiteren Einzelscheiben besteht gewöhnlich aus einer Verbundsicherheitsglasscheibe. Die Verbundsicherheitsglasscheibe enthält mindestens zwei Scheiben und eine Polymerschicht, die zwei Scheiben fest miteinander verbindet. Die Glasscheiben werden so fest miteinander verbunden, dass bei Glasbruch der Verglasung Abfallen von Bruchstücken sowie Durchbruch von Personen und Gegenständen verhindert wird.

Um die rutschhemmende Glasscheibe von den darunter befindlichen Glasscheiben zu trennen, ermöglicht die vorliegende Erfindung eine sehr vorteilhafte wieder verwendbare Verbindungstechnologie zwischen der Glasscheibe mit der rutschhemmenden Oberfläche und der Verbundsicherheitsglasscheibe.

Die Glasscheibe mit rutschhemmender Oberfläche kann eine monolithische Scheibe sein, die dann bevorzugt vorgespannt ist, es ist aber ebenso möglich, eine Verbundglasplatte aus einer Glasscheibe und weiteren Glas- oder Kunststoffplatten oder Platten aus anderem Material, beispielsweise Stahl oder Keramik herzustellen. Die einzelnen Platten werden dann mithilfe von Klebeschichten beispielsweise in Form thermoplastischer Folien oder auszuhärtenden Flüssigkeiten miteinander verbunden, wobei die mit der Oberflächenbeschichtung versehene Nutzseite natürlich nach außen weist. Als Klebeschichten haben sich Folien aus Polyvinylbutyral bewährt.

Eine bevorzugte Ausgestaltung der Erfindung ist eine begehbare Verbundsicherheitsglasscheibe mit rutschhemmender Oberfläche, wobei die Polymerschicht der Verbundsicherheitsscheibe mindestens eine der Polymerfolien Polyvinylbutyral (PVB), Ethylvinylacetat (EVA), Polyurethan (PU) insbesondere mit einer Dicke von 0,76 mm bis 1,6 mm enthält. Diese Polymere haben sich als besonders geeignet erwiesen. Der Bereich für die Dicke ist besonders vorteilhaft.

Eine bevorzugte Ausgestaltung der Erfindung ist eine begehbare Verbundsicherheitsglasscheibe mit rutschhemmender Oberfläche, wobei die Glasscheiben der Verbundsicherheitsglasscheibe eine Dicke von 8 mm bis 25 mm aufweisen. Der Bereich für die Dicke der Scheiben ist besonders vorteilhaft für die Stabilität der Verbundsicherheitsscheibe.

Eine bevorzugte Ausgestaltung der Erfindung ist eine begehbare Verbundsicherheitsglasscheibe mit rutschhemmender Oberfläche, wobei die polymere Zwischenschicht zwischen der rutschhemmenden Glasscheibe und der Verbundsicherheitsglasscheibe mindestens eine der Polymerfolien Polyvinylbutyral (PVB), Ethylvinylacetat (EVA), Polyurethan (PU) oder Polyvinylchlorid (PVC) insbesondere mit einer Dicke von 0,5 mm bis 2,0 mm enthält. Diese Polymere haben sich als besonders geeignet erwiesen. Dieser Bereich für die Dicken der Polymerfolien ist besonders vorteilhaft. Zwischen der oberen rutschhemmenden Verglasung und der unteren Verbundsicherheitsglasscheibe wird eine klare, transparente oder opake Zwischenschicht gelegt die eine Distanzierung sicherstellt, damit keine Verletzung der Glasscheiben untereinander stattfindet.

Eine bevorzugte Ausgestaltung der Erfindung ist eine begehbare Verbundsicherheitsglasscheibe mit rutschhemmender Oberfläche, wobei die Glasscheibe mit rutschhemmender Oberfläche thermisch oder chemisch vorgespannt oder teilvorgespannt ist und eine Dicke von 6,0 mm bis 12,0 mm aufweist. Der Bereich für die Dicke ist besonders vorteilhaft für die Scheiben der Verbundsicherheitsscheibe.

Eine bevorzugte Ausgestaltung der Erfindung ist eine begehbare Verbundsicherheitsglasscheibe mit rutschhemmender Oberfläche, wobei die rutschhemmende Oberfläche eine auf der Glasscheibe aufgebrachte Oberflächenbeschichtung ist.

Eine bevorzugte Ausgestaltung der Erfindung ist eine begehbare Verbundsicherheitsglasscheibe mit rutschhemmender Oberfläche, wobei die rutschhemmende Oberflächenbeschichtung durch Aufrauen mit Sandstrahlen, durch Ätzen mit Säure, durch Siebdruck insbesondere mit rutschhemmender Emaille oder durch Laserstrukturierung aufgebracht ist. Abhängig von der gewünschten Struktur kann die Bedruckung unterschiedlich dicht ausfallen und von dem Grad der Rutschhemmung variieren. Die Glasscheibe mit rutschhemmender Oberfläche ist vorteilhaft zumindest bereichsweise bedeckt und bildet bevorzugt ein vorbestimmtes Muster.

Die Oberflächenbeschichtung kann sowohl farblos als auch farbig transluzent oder opak in verschiedenen Farben hergestellt werden. Die Farbeffekte lassen sich durch farbige Glasfritten oder der Oberflächenbeschichtung beziehungsweise der Keramikpaste beigemengte Pigmente erzielen.

Die aufgetragene Schicht wird die Nutzfläche, also die zu betretende Fläche des Glaselements üblicherweise ganzflächig bedecken, da eine solche durchgehende Beschichtung relativ einfach herzustellen ist. Die Oberflächenbeschichtung kann aber auch in bestimmten regelmäßigen oder unregelmäßigen Mustern aufgebracht sein, wodurch sich besondere ästhetische Effekte erzielen lassen. Die Muster können auch aus unterschiedlich gefärbten Oberflächenbeschichtungen bestehen.

Eine bevorzugte Ausgestaltung der Erfindung ist eine begehbare Verbundsicherheitsglasscheibe mit rutschhemmender Oberfläche, wobei die umlaufende elastische Polymerdichtung Polymere wie Silikonkautschuk, Polyurethane, Buthylkautschuk und/oder Polyacrylate enthält. Der Glasrand zwischen der Verbundsicherheitsglasscheibe und der Glasscheibe mit einer rutschhemmenden Oberfläche ist derartig ausgeformt, dass eine elastische Dichtung an den Glaskanten eine dauerhafte Luftdichte Verbindung ermöglicht. Die Glaskantenform ist derartig ausgebildet, dass die Dichtung flächenbündig ausgeführt werden kann. Weiter ist die Möglichkeit gegeben, an dieser Dichtung Fahnen zu extrudieren, die eine druckfeste Barriere zur späteren Abdichtung mit elastischen Dichtstoffen erlauben. Die Fahnen können auch aus einem härteren Elastomer ausgeführt werden, wodurch ein Elastomerprofil mit unterschiedlich harten Volumengeometrien erhalten wird. Die Fahnen können so ausgestaltet sein, dass sie eine dauerhafte Abdichtung ermöglichen.

Eine bevorzugte Ausgestaltung der Erfindung ist eine begehbare Verbundsicherheitsglasscheibe mit rutschhemmender Oberfläche, wobei die umlaufende elastische Polymerdichtung ein Silikonprofil ist.

Eine bevorzugte Ausgestaltung der Erfindung ist eine begehbare Verbundsicherheitsglasscheibe mit rutschhemmender Oberfläche, wobei die elastische Polymerdichtung Vorsprünge aufweist. Die Vorsprünge schützen vorteilhaft die Kanten der Verbundsicherheitsglasscheibe mit rutschhemmender Oberfläche, da sie einen direkten Kontakt der Glaskante mit den Transportrahmen verhindern. Die Vorsprünge sind auch vorteilhaft, wenn Verbundsicherheitsglasscheiben mit rutschhemmender Oberfläche nebeneinander als Module beispielsweise im Fußbodenbereich gesetzt werden. Dadurch wird ein Abstandshalter erhalten und der direkte Kontakt der Kanten der Module wird verhindert. Eine bevorzugte Ausgestaltung der Erfindung ist eine begehbare Verbundsicherheitsglasscheibe mit rutschhemmender Oberfläche, wobei die Lochbohrung einen Durchmesser von 5 mm bis 8 mm aufweist. Dieser Durchmesserbereich hat sich beim Anlegen von Unterdruck sowie Verschließen und Entspannen des Ventils als besonders wirksam erwiesen.

Die Elastische Dichtung wird mittels Unterdrucks an der Glaskante gehalten. Der Unterdruck wird mittels eines Ventils dauerhaft hergestellt, das im unteren Glaspaket eingearbeitet ist. Dazu ist in den unteren Glasscheiben eine Lochbohrung vorgesehen, in die das Ventil dauerhaft luftdicht eingebettet ist.

Die Aufgabe der vorliegenden Erfindung wird weiter durch ein Verfahren zur Herstellung einer begehbaren Verbundsicherheitsglasscheibe mit rutschhemmender Oberfläche gelöst, wobei
a) auf der einen Oberfläche einer Verbundsicherheitsglasscheibe mit einer Lochbohrung eine polymere Zwischenschicht aufgebracht wird,
b) im Randbereich der polymeren Zwischenschicht eine umlaufende elastische Polymerdichtung aufgelegt wird,
c) auf die polymere Zwischenschicht passend in die umlaufende elastische Polymerdichtung eine Glasscheibe mit einer rutschhemmenden Oberfläche aufgelegt wird,
d) durch die Lochbohrung in der Verbundsicherheitsglasscheibe Unterdruck angelegt wird und
e) die Lochbohrung bei Unterdruck mit einem Ventil versiegelt wird, und f) der Unterdruck mit dem Ventil aufrechterhalten wird.

Ein Ventil lässt sich zuverlässig und sauber mehrfach verwenden. Zum Austausch der Glasscheibe wird das Ventil entspannt und der Unterdruck abgebaut. Anschließend kann die abgenutzte obere rutschhemmende Glasscheibe ausgetauscht werden. Nachfolgend wird ein Unterdruck erzeugt, wodurch erneut eine dauerhafte Verbindung der Glaselemente untereinander sichergestellt wird. Abschließend wird das Ventil verschlossen und der Unterdruck aufrechterhalten.

Die Aufgabe der vorliegenden Erfindung wird weiter durch die Verwendung der begehbaren Verbundsicherheitsglasscheibe mit rutschhemmender Oberfläche für Glasböden, Podeste, Treppenstufen, Lichtausschnitte und Brückenverglasungen gelöst.

Eine andere bevorzugte Ausgestaltung der Erfindung ist eine Verbundsicherheitsglasscheibe mit rutschhemmender Oberfläche bei der die obere Glasscheibe mit rutschhemmender Oberfläche mit der Verbundsicherheitsglasscheibe zusätzlich zu Unterdruck über Adhäsionskräfte zusammengehalten wird. Dazu reicht eine minimale Menge Flüssigkeit zwischen den Glasplatten aus, um eine starke Haftung gegen Zugkraft zu erzeugen. Als Flüssigkeit wird Wasser bevorzugt. Für rutschhemmende Böden insbesondere im Außenbereich wird als Flüssigkeit Polyethylenglykol bevorzugt. Polyethylenglykol ist frostsicher bis -30°C für PEG200 und ungiftig.

Zur Verhinderung der horizontalen Verschiebbarkeit der obersten Scheibe eignen sich Halteklammern oder eine Umrandung insbesondere ein U-Profil aus flexiblem Material, das zusätzlich als Dichtung dient.

Bei Verwendung von Wasser als Flüssigkeit wird eine flache Wanne mit Wasser gefüllt und die Scheiben unter einer leichten Schräglage unter der Wasseroberfläche verbunden, damit Luftblasen leichter entweichen. Die Flüssigkeit kann auch im Zentrum der Scheibe aufgetragen werden. Die obere Scheibe wird aufgelegt und gleichmäßig gedrückt, damit eingeschlossene Luftblasen entweichen.

Die Erfindung wird im Folgenden anhand einer Zeichnung näher erläutert. Es zeigt:
- Fig. 1:: Einen Querschnitt einer erfindungsgemäßen begehbaren Verbundsicherheitsglasscheibe mit rutschhemmender Oberfläche mit unversiegelter Lochbohrung,
- Fig. 2:: Einen Querschnitt einer erfindungsgemäßen begehbaren Verbundsicherheitsglasscheibe mit rutschhemmender Oberfläche, wobei die Lochbohrung bei Unterdruck mit einem Ventil versiegelt ist,
- Fig. 3:: Eine Draufsicht von unten auf eine erfindungsgemäße begehbare Verbundsicherheitsglasscheibe mit rutschhemmender Oberfläche,
- Fig. 4a:: Einen Querschnitt einer erfindungsgemäßen begehbaren Verbundsicherheitsglasscheibe mit rutschhemmender Oberfläche mit einer bevorzugten Ausführungsform einer elastischen Abdichtung im Bereich der Kanten,
- Fig. 4b:: Einen Querschnitt einer erfindungsgemäßen begehbaren Verbundsicherheitsglasscheibe mit rutschhemmender Oberfläche mit einer bevorzugten Ausführungsform einer elastischen Abdichtung im Bereich der Kanten,
- Fig. 5:: Eine sphärische Darstellung einer umlaufenden elastischen Polymerdichtung als Profil mit Vorsprüngen,
- Fig. 6:: Einen Querschnitt einer begehbaren Verbundsicherheitsglasscheibe mit rutschhemmender Oberfläche nach dem Stand der Technik,
- Fig. 7:: Eine Draufsicht von oben auf eine erfindungsgemäße begehbare Verbundsicherheitsglasscheibe mit rutschhemmender Oberfläche wobei die polymere Zwischenschicht anstatt vollflächig nur partiell deckungsgleich unter einer partiell aufgebrachten rutschhemmenden Oberfläche angebracht ist und
- Fig. 8:: Einen Querschnitt einer erfindungsgemäßen begehbaren Verbundsicherheitsglasscheibe mit rutschhemmender Oberfläche nach Fig. 7.

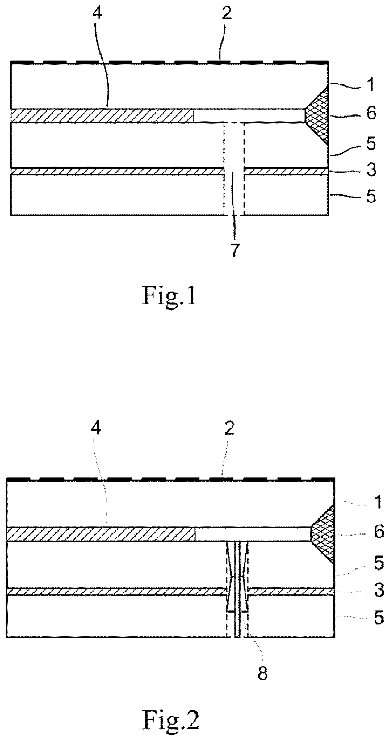

In Fig. 1 ist eine erfindungsgemäße begehbare Verbundsicherheitsglasscheibe mit rutschhemmender Oberfläche mit unversiegelter Lochbohrung, daher im entspannten Zustand im Querschnitt dargestellt. Dazu wird eine Verbundsicherheitsglasscheibe 5 aus mindestens zwei 20,0 mm dicken Glasscheiben hergestellt. Dazu werden die Glasscheiben mit einer PVB Folie 3 mit Dicke von 0,76 mm oder 1,52 mm laminiert. Danach wird in die Verbundsicherheitsglasscheibe 5 eine Lochbohrung 7 vorgenommen. Auf eine Glasfläche der Verbundsicherheitsglasscheibe 5 wird eine Polymerfolie 4 mit Dicke von 1,52 mm gelegt. Im Randbereich der Polymerfolie 4 wird umlaufend ein Silikonprofil als elastische Polymerdichtung 6 eingesetzt. Eine Glasscheibe 1 mit Dicke von 12,0 mm mit einer rutschhemmenden Oberfläche 2 wird so auf die Polymerfolie 4 gelegt, dass die rutschhemmende Oberfläche 2 nach oben zeigt. Die rutschhemmende Oberfläche 2 wurde durch Siebdruck auf die Fläche der Glasscheibe 1 aufgetragen.

In Fig. 2 ist eine erfindungsgemäße begehbare Verbundsicherheitsglasscheibe mit rutschhemmender Oberfläche mit versiegelter Lochbohrung, daher bei angelegtem Vakuum, im Querschnitt dargestellt. Dazu wird an die Verbundsicherheitsglasscheibe 5 durch die Lochbohrung 7 ein Unterdruck angelegt. Dann wird ein in der Lochbohrung 7 befindliches Ventil 8 bei Unterdruck verschlossen. Der Unterdruck hält die obere Scheibe 1 über die Zwischenschicht 4 mit der Verbundsicherheitsscheibe 5 fest verbunden.

In Fig. 1 und Fig. 2 ist zu sehen, dass die an die Zwischenschicht 4 angrenzende Scheibe der Verbundsicherheitsglasscheibe 5 und die Scheibe 1 im Randbereich bevorzugt Aussparungen aufweisen, welche die Positionierung der umlaufenden elastischen Polymerdichtung 6 ermöglichen.

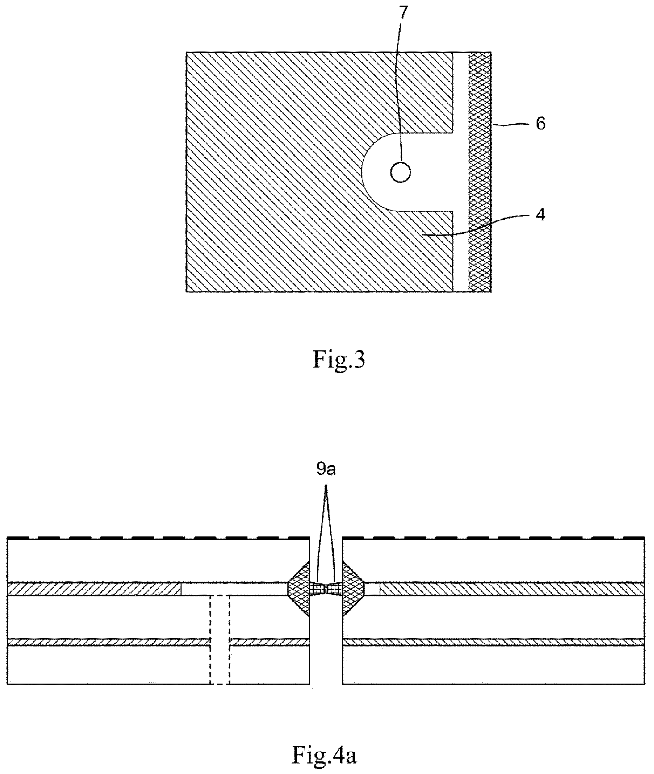

In Fig. 3 ist eine erfindungsgemäße begehbare Verbundsicherheitsglasscheibe mit rutschhemmender Oberfläche als Draufsicht von unten dargestellt. Es wird gezeigt wie die Lochbohrung 7 angebracht ist und wie die Zwischenschicht 4 positioniert ist. Ebenso gezeigt wird, wie die umlaufende elastische Polymerdichtung 6 eingesetzt ist.

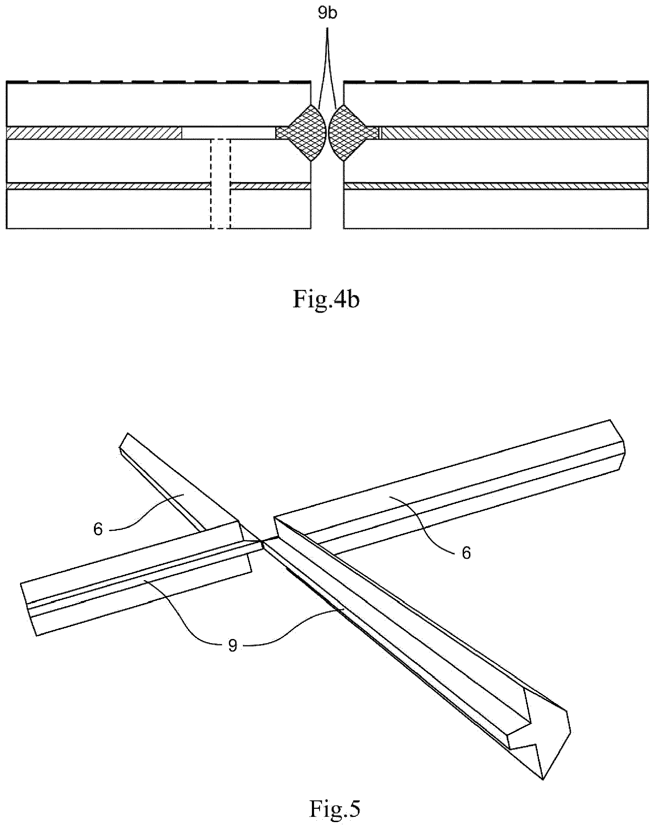

In Fig. 4a und Fig. 4b sind zwei nebeneinander liegende erfindungsgemäße begehbare Verbundsicherheitsglasscheiben mit rutschhemmender Oberfläche mit einer bevorzugten Ausführungsform einer elastischen Abdichtung 6 im Bereich der Kanten im Querschnitt dargestellt. Die elastische Abdichtung 6 weist Vorsprünge 9a und 9b auf. Die Vorsprünge 9a und 9b schützen die Kanten der Verbundsicherheitsglasscheiben mit rutschhemmender Oberfläche beim Transport und bei der Auflegung nebeneinander im Fußbodenbereich. Sie stellen auch einen Distanzhalter dar. Die Vorsprünge 9a und 9b unterscheiden sich in der Ausführung. Die Vorsprünge 9a sind nach Außen verjüngt. Die Vorsprünge 9b sind nach Außen gewölbt.

In Fig. 5 wird die umlaufende elastische Polymerdichtung 6 als Profil, insbesondere als Silicon Profil in einer sphärischen Darstellung gezeigt. Dargestellt ist eine Profilvariante 6 mit nach Außen verjüngten Vorsprüngen 9. Die Verwendung von Profilen hat sich als elastische Polymerdichtung 6 bewährt.

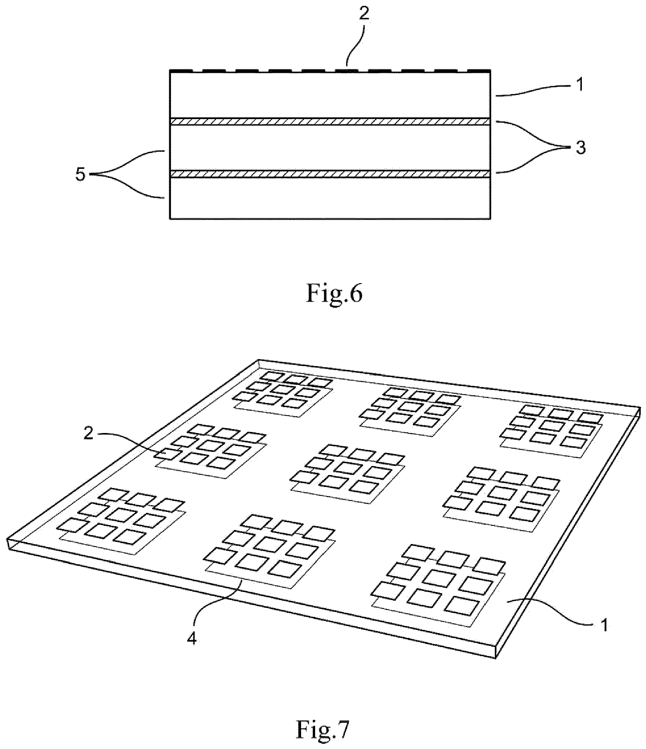

In Fig. 6 ist eine begehbare Verbundsicherheitsglasscheibe mit rutschhemmender Oberfläche nach dem Stand der Technik dargestellt. Es wird gezeigt, dass die oberste rutschhemmende Glasscheibe fest mit den darunterliegenden tragenden Scheiben verbunden ist. Ein Austausch der oberen Scheibe ist nicht mehr möglich. Die gesamte Verbundsicherheitsglasscheibe mit rutschhemmender Oberfläche muss im Reparaturfall ausgetauscht werden. Eine Erneuerung der obersten Scheibe ist nicht möglich ohne den kompletten Aufbau auszubauen. Die Erneuerung wird erforderlich im Falle von Bruch oder Verschleiß oder wenn neues Design gewünscht wird.

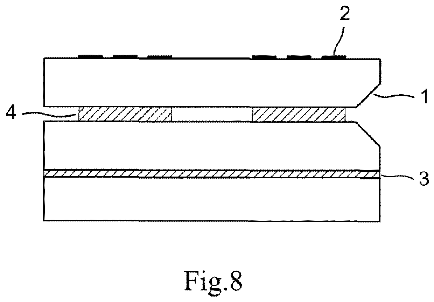

In Fig. 7 und in Fig. 8 wird gezeigt, dass die polymere Zwischenschicht 4 anstatt vollflächig nur partiell und nahezu deckungsgleich unter einer partiell aufgebrachten rutschhemmenden Oberfläche 2 angebracht ist. Aus Gründen der Übersichtlichkeit sind die umlaufende Polymerdichtung 6 und die Lochbohrung 7 nicht gezeigt.

### Bezugszeichenliste

- 1: oberste Glasscheibe / rutschhemmende Glasscheibe / Einscheibensicherheitsglas / Schutzglas
- 2: rutschhemmende Oberflächen
- 3: Polymerschichten zum festen Verbinden/Laminieren von Glasscheiben einer Verbundsicherheitsglasscheibe
- 4: klare, transparente oder opake Zwischenschicht / Polymerfolie
- 5: Verbundsicherheitsglasscheibe / tragende Glasscheiben
- 6: Elastische Polymerdichtung
- 7: Lochbohrungen in der Verbundsicherheitsglasscheibe
- 8: Ventil zum Versiegeln des Unterdrucks zwischen der rutschhemmenden Glasscheibe und der Verbundsicherheitsglasscheibe
- 9: Vorsprünge der elastischen Polymerdichtung (6)

## Patentansprüche

1. Eine begehbare Verbundsicherheitsglasscheibe mit einer rutschhemmenden Oberfläche, umfassend
mindestens zwei Glasscheiben, die mit einer Polymerschicht (3) fest miteinander zu einer Verbundsicherheitsglasscheibe (5) verbunden sind, wobei
- auf der einen Oberfläche der Verbundsicherheitsglasscheibe (5) eine polymere Zwischenschicht (4) aufgebracht ist,
- auf der polymeren Zwischenschicht (4) eine Glasscheibe (1) mit einer rutschhemmenden Oberfläche (2) aufgelegt ist,
- im Randbereich der polymeren Zwischenschicht (4) umlaufend eine elastische Polymerdichtung (6) eingesetzt ist,
- die Verbundsicherheitsglasscheibe (5) eine Lochbohrung (7) aufweist und die Lochbohrung (7) bei Unterdruck mit einem Ventil (8) versiegelt ist,
wobei das Ventil (8) den Unterdruck aufrechterhält.

2. Die begehbare Verbundsicherheitsglasscheibe mit rutschhemmender Oberfläche nach Anspruch 1, wobei die Polymerschicht (3) mindestens eine der Polymerfolien Polyvinylbutyral (PVB), Ethylvinylacetat (EVA), Polyurethan (PU) mit einer Dicke von 0,76 mm bis 1,6 mm enthält.

3. Die begehbare Verbundsicherheitsglasscheibe mit rutschhemmender Oberfläche nach Anspruch 1 oder 2, wobei die Glasscheiben der Verbundsicherheitsglasscheibe (5) eine Dicke von 8 mm bis 25 mm aufweisen.

4. Die begehbare Verbundsicherheitsglasscheibe mit rutschhemmender Oberfläche nach einem der Ansprüche 1 bis 3, wobei die polymere Zwischenschicht (4) mindestens eine der Polymerfolien Polyvinylbutyral (PVB), Ethylvinylacetat (EVA), Polyurethan (PU) oder Polyvinylchlorid (PVC) mit einer Dicke von 0,5 mm bis 2,0 mm enthält.

5. Die begehbare Verbundsicherheitsglasscheibe mit rutschhemmender Oberfläche nach einem der Ansprüche 1 bis 4, wobei die polymere Zwischenschicht (4) partiell bevorzugt nahezu deckungsgleich unter einer partiell rutschhemmenden Oberfläche (2) angebracht ist.

6. Die begehbare Verbundsicherheitsglasscheibe mit rutschhemmender Oberfläche nach einem der Ansprüche 1 bis 5, wobei die Glasscheibe (1) mit rutschhemmender Oberfläche thermisch oder chemisch vorgespannt oder teilvorgespannt ist und eine Dicke von 6,0 mm bis 12,0 mm aufweist.

7. Die begehbare Verbundsicherheitsglasscheibe mit rutschhemmender Oberfläche nach einem der Ansprüche 1 bis 6, wobei die rutschhemmende Oberfläche (2) eine auf der Glasscheibe (1) aufgebrachte Oberflächenbeschichtung ist, die durch Aufrauen mit Sandstrahl, durch Ätzen mit Säure, durch Siebdruck insbesondere mit rutschhemmender Emaille oder durch Laserstrukturierung aufgebracht ist, die Glasscheibe (1) zumindest bereichsweise bedeckt und bevorzugt ein vorbestimmtes Muster bildet.

8. Die begehbare Verbundsicherheitsglasscheibe mit rutschhemmender Oberfläche nach einem der Ansprüche 1 bis 7, wobei die umlaufende elastische Polymerdichtung (6) Polymere wie Silikonkautschuk, Polyurethane, Buthylkautschuk und/oder Polyacrylate enthält.

9. Die begehbare Verbundsicherheitsglasscheibe mit rutschhemmender Oberfläche nach einem der Ansprüche 1 bis 8, wobei die umlaufende elastische Polymerdichtung (6) ein Silikonprofil ist.

10. Die begehbare Verbundsicherheitsglasscheibe mit rutschhemmender Oberfläche nach einem der Ansprüche 1 bis 9, wobei die elastische Polymerdichtung (6) Vorsprünge (9) aufweist.

11. Die begehbare Verbundsicherheitsglasscheibe mit rutschhemmender Oberfläche nach einem der Ansprüche 1 bis 10, wobei die Lochbohrung (7) einen Durchmesser von 5 mm bis 8 mm aufweist.

12. Ein Verfahren zur Herstellung einer begehbaren Verbundsicherheitsglasscheibe mit rutschhemmender Oberfläche nach einem der Ansprüche 1 bis 11, wobei
a) auf der einen Oberfläche einer Verbundsicherheitsglasscheibe (5) mit Lochbohrung (7) eine polymere Zwischenschicht (4) aufgebracht wird,
b) im Randbereich der polymeren Zwischenschicht (4) eine umlaufende elastische Polymerdichtung (6) aufgelegt wird
c) auf die polymere Zwischenschicht (4) passend in die umlaufende elastische Polymerdichtung (6) eine Glasscheibe (1) mit einer rutschhemmenden Oberfläche (2) aufgelegt wird,
d) durch die Lochbohrung (7) in der Verbundsicherheitsglasscheibe (5) Unterdruck angelegt wird,
e) die Lochbohrung (7) bei Unterdruck mit einem Ventil (8) versiegelt wird, und
f) der Unterdruck mit dem Ventil (8) aufrechterhalten wird.

13. Verwendung einer begehbaren Verbundsicherheitsglasscheibe mit rutschhemmender Oberfläche nach einem der Ansprüche 1 bis 11 für Glasböden, Podeste, Treppenstufen, Lichtausschnitte und Brückenverglasungen.

## Claims

1. A walk-on laminated safety glass pane having an anti-slip surface, comprising at least two glass panes, which are permanently bonded to each other by a polymeric layer (3) to form a laminated safety glass pane (5), wherein
- a polymeric intermediate layer (4) is applied to one surface of the laminated safety glass pane (5),
- a glass pane (1) having an anti-slip surface (2) is applied to the polymeric intermediate layer (4),
- an elastic polymeric gasket (6) is inserted circumferentially in the edge region of the polymeric intermediate layer (4),
- the laminated safety glass pane (5) has a drilled hole (7) and the drilled hole (7) is sealed at subatmospheric pressure by a valve (8), wherein the valve (8) maintains the subatmospheric pressure.

2. The walk-on laminated safety glass pane having an anti-slip surface according to claim 1, wherein the polymeric layer (3) contains at least one of the polymeric films polyvinyl butyral (PVB), ethyl vinyl acetate (EVA), polyurethane (PU) with a thickness of 0.76 mm to 1.6 mm.

3. The walk-on laminated safety glass pane having an anti-slip surface according to claim 1 or 2, wherein the glass panes of the laminated safety glass pane (5) have a thickness of 8 mm to 25 mm.

4. The walk-on laminated safety glass pane having an anti-slip surface according to one of claims 1 through 3, wherein the polymeric intermediate layer (4) contains at least one of the polymeric films polyvinyl butyral (PVB), ethyl vinyl acetate (EVA), polyurethane (PU), or polyvinyl chloride (PVC) with a thickness of 0.5 mm to 2.0 mm.

5. The walk-on laminated safety glass pane having an anti-slip surface according to one of claims 1 through 4, wherein the polymeric intermediate layer (4) is mounted partially, preferably almost congruently, under a partially anti-slip surface (2).

6. The walk-on laminated safety glass pane having an anti-slip surface according to one of claims 1 through 5, wherein the glass pane (1) having an anti-slip surface is thermally or chemically prestressed or partially prestressed and has a thickness of 6.0 mm to 12.0 mm.

7. The walk-on laminated safety glass pane having an anti-slip surface according to one of claims 1 through 6, wherein the anti-slip surface (2) is a surface coating applied to the glass pane (1), which is applied by roughening with sandblasting, by etching with acid, by screen printing, in particular with anti-slip enamel, or by laser patterning, which covers the glass pane (1) at least in regions, and preferably forms a predetermined pattern.

8. The walk-on laminated safety glass pane having an anti-slip surface according to one of claims 1 through 7, wherein the circumferential elastic polymeric gasket (6) contains polymers such as silicone rubber, polyurethanes, butyl rubber, and/or polyacrylates.

9. The walk-on laminated safety glass pane having an anti-slip surface according to one of claims 1 through 8, wherein the circumferential elastic polymeric gasket (6) is a silicone profile.

10. The walk-on laminated safety glass pane having an anti-slip surface according to one of claims 1 through 9, wherein the elastic polymeric gasket (6) has protrusions (9).

11. The walk-on laminated safety glass pane having an anti-slip surface according to one of claims 1 through 10, wherein the drilled hole (7) has a diameter of 5 mm to 8 mm.

12. A method for producing a walk-on laminated safety glass pane having an anti-slip surface according to one of claims 1 through 11, wherein
a) a polymeric intermediate layer (4) is applied to one surface of a laminated safety glass pane (5) with a drilled hole (7),
b) a circumferential elastic polymeric gasket (6) is placed in the edge region of the polymeric intermediate layer (4)
c) a glass pane (1) having an anti-slip surface (2) is placed on the polymeric intermediate layer (4) fitting into the circumferential elastic polymeric gasket (6),
d) subatmospheric pressure is applied through the drilled hole (7) in the laminated safety glass pane (5), and
e) the drilled hole (7) is sealed at subatmospheric pressure by a valve (8), and
f) the subatmospheric pressure is maintained by the valve (8).

13. Use of a walk-on laminated safety glass pane having an anti-slip surface according to one of claims 1 through 11 for glass floors, platforms, stair steps, light cutouts, and bridge glazings.

## Revendications

1. Plaque de verre de sécurité feuilleté praticable ayant une surface antidérapante, comprenant
au moins deux plaques de verre, qui sont reliées solidement l'une à l'autre par une couche de polymère (3) pour former une plaque de verre de sécurité feuilleté (5), où
- une couche intermédiaire polymérique (4) est appliquée sur l'une des surfaces de la plaque de verre de sécurité feuilleté (5) ;
- une plaque de verre (1) ayant une surface antidérapante (2) est placée sur la couche intermédiaire polymérique (4) ;
- un joint d'étanchéité polymérique élastique (6) est mis en place de manière périphérique dans la région de bordure de la couche intermédiaire polymérique (4) ;
- la plaque de verre de sécurité feuilleté (5) présente un trou de perçage (7) et le trou de perçage (7) est scellé à une pression négative par une soupape (8), la soupape (8) maintenant la pression négative.

2. Plaque en verre de sécurité feuilleté praticable ayant une surface antidérapante, selon la revendication 1, dans laquelle la couche de polymère (3) contient au moins l'un des films polymériques poly(butyral vinylique) (PVB), éthylène-acétate de vinyle (EVA), polyuréthane (PU) avec une épaisseur de 0,76 mm à 1,6 mm.

3. Plaque en verre de sécurité feuilleté praticable ayant une surface antidérapante, selon l'une des revendications 1 ou 2, dans laquelle les plaques de verre de la plaque de verre de sécurité feuilleté (5) présentent une épaisseur de 8 mm à 25 mm.

4. Plaque de verre de sécurité feuilleté praticable ayant une surface antidérapante, selon l'une des revendications 1 à 3, dans laquelle la couche intermédiaire polymérique (4) contient au moins l'un des films polymériques poly(butyral vinylique) (PVB), éthylène-acétate de vinyle (EVA), polyuréthane (PU) ou poly(chlorure de vinyle) (PVC) avec une épaisseur de 0,5 mm à 2,0 mm.

5. Plaque de verre de sécurité feuilleté praticable ayant une surface antidérapante, selon l'une des revendications 1 à 4, dans laquelle la couche intermédiaire polymérique (4) est appliquée sous une surface partiellement antidérapante (2) de façon partiellement de préférence pratiquement coïncidente.

6. Plaque de verre de sécurité feuilleté praticable ayant une surface antidérapante, selon l'une des revendications 1 à 5, dans laquelle la plaque de verre (1) ayant une surface antidérapante (2) est précontrainte ou partiellement précontrainte chimiquement ou thermiquement et présente une épaisseur de 6,0 mm à 12,0 mm.

7. Plaque de verre de sécurité feuilleté praticable ayant une surface antidérapante, selon l'une des revendications 1 à 6, dans laquelle la surface antidérapante (2) est un revêtement de surface appliqué sur la plaque de verre (1), qui est appliqué par décapage au jet de sable, par attaque à l'acide, par sérigraphie en particulier avec un émail antidérapant ou par structuration au laser, recouvre au moins par endroits la plaque de verre (1) et de préférence forme un motif prédéfini.

8. Plaque de verre de sécurité feuilleté praticable ayant une surface antidérapante, selon l'une des revendications 1 à 7, dans laquelle le joint d'étanchéité polymérique élastique périphérique (6) contient des polymères comme le caoutchouc silicone, les polyuréthanes, le caoutchouc butyle et/ou les polyacrylates.

9. Plaque de verre de sécurité feuilleté praticable ayant une surface antidérapante, selon l'une des revendications 1 à 8, dans laquelle le joint d'étanchéité polymérique élastique périphérique (6) est un profilé de silicone.

10. Plaque de verre de sécurité feuilleté praticable ayant une surface antidérapante, selon l'une des revendications 1 à 9, dans laquelle le joint d'étanchéité polymérique élastique (6) présente des saillies (9).

11. Plaque de verre de sécurité feuilleté praticable ayant une surface antidérapante, selon l'une des revendications 1 à 10, dans laquelle le trou de perçage (7) présente un diamètre de 5 mm à 8 mm.

12. Procédé de fabrication d'une plaque de verre de sécurité feuilleté praticable ayant une surface antidérapante selon l'une des revendications 1 à 11, dans lequel
a) on applique une couche intermédiaire polymérique (4) sur l'une des surfaces d'une plaque de verre de sécurité feuilleté (5) ayant un trou de perçage (7) ;
b) on place un joint d'étanchéité polymérique élastique périphérique (6) dans la région de bordure de la couche intermédiaire polymérique (4) ;
c) on place une plaque de verre (1) ayant une surface antidérapante (2) sur la couche intermédiaire polymérique (4) s'ajustant dans le joint d'étanchéité polymérique élastique périphérique (6) ;
d) on applique une pression négative à travers le trou de perçage (7) dans la plaque de verre de sécurité feuilleté (5),
e) on scelle le trou de perçage (7) à une pression négative par une soupape (8) ; et
f) on maintient la pression négative par la soupape (8).

13. Utilisation d'une plaque de verre de sécurité feuilleté praticable ayant une surface antidérapante selon l'une des revendications 1 à 11 pour des sols en verre, des estrades, des marches d'escalier, des découpes vitrées et des vitrages de ponts.
